# FASCICULE DE BREVET EUROPEEN

(11) **EP 2 228 813 B1**
(45) Date de publication et mention de la délivrance du brevet: **09.08.2017**
(21) Numéro de dépôt: 10155378.2
(22) Date de dépôt: 03.03.2010
(51) Int. Cl.: H01H 33/66, H01H 47/04, H02J 7/34

(54) **Appareillage moyenne ou haute tension avec un dispositif de charge et de surveillance d'un condensateur utilisé en décharge pour commander un actionneur magnétique**
Mittel- oder Hochspannungsvorrichtung mit einer Einrichtung zum Überwachen und Laden eines zum Antrieb eines magnetischen Aktuators verwendeten Kondensators
Medium or high voltage apparatus comprising a monitoring and charging device for a capacitor used for driving a magnetic actuator

(30) Priorité: 09.03.2009 FR 0951468
(43) Date de publication de la demande: 15.09.2010
(73) Titulaire: Schneider Electric Energy France, 92500 Rueil-Malmaison (FR)
(72) Inventeur: Bonjean, Marc, 34400 Lunel Viel (FR)
(74) Mandataire: Ilgart, Jean-Christophe

(56) Documents cités:
- EP-A- 0 493 271
- JP-A- 2006 166 542
- US-A1- 2008 191 821
- US-A1- 2008 269 724

## Description

### DOMAINE TECHNIQUE

L'invention concerne un système et un procédé de commande de l'ouverture et de la fermeture d'un appareillage moyenne ou haute tension à l'aide d'un actionneur magnétique.

### ÉTAT DE LA TECHNIQUE ANTÉRIEURE

Le domaine de l'invention est celui des mécanismes de commande à actionneur magnétique à aimant permanent permettant de manoeuvrer notamment les ampoules à vide de disjoncteurs moyenne et haute tension.

Un disjoncteur est un organe de sécurité qui déclenche instantanément si un ordre d'ouverture (ou de fermeture) est transmis par un relais de mesure et de protection des tensions et des courants électriques, après détection d'un défaut sur un circuit électrique. La manoeuvre des pièces d'un actionneur magnétique est alors obtenue par injection instantanée d'une certaine quantité d'énergie préalablement stockée dans un condensateur d'un circuit magnétique. Il est donc indispensable qu'une telle quantité d'énergie soit toujours disponible pour permettre cette manoeuvre et sinon qu'une alarme soit émise pour informer l'opérateur d'une défaillance du condensateur et du disjoncteur.

Le document référencé [1] en fin de description illustre ainsi l'utilisation d'un condensateur permettant de faire fonctionner un actionneur agissant sur une ampoule à vide. Il décrit un circuit d'alimentation électrique fourni pour un dispositif de commande d'un commutateur comprenant un actionneur, un dispositif de commande électromagnétique pour déplacer l'actionneur d'une première position de commutation à une seconde position de commutation, un condensateur permettant de fournir une puissance électrique au dispositif de commande électromagnétique.

Le condensateur est alors utilisé en « décharge ». Il fonctionne comme un réservoir d'énergie, en étant chargé lentement à puissance réduite puis déchargé rapidement avec une puissance instantanée élevée par exemple 50-100 W pour la charge et 10-20 kW crête pour la décharge. Il permet d'alimenter un mécanisme de commande à actionneur magnétique pour appareillage de coupure en moyenne ou haute tension. De manière classique, un tel appareillage comprend un électro-aimant ayant deux positions stables, qui utilise des aimants permanents et une ou plusieurs bobines qui, lorsqu'elles sont alimentées, permettent de passer d'une position (état ouvert de l'appareillage) à l'autre (état fermé de l'appareillage) et vice versa.

Le problème technique que se propose de résoudre l'invention est celui de charger un tel condensateur utilisé en décharge en respectant les fonctionnalités suivantes :
- charge de ce condensateur en un temps minimum,
- vérification de la bonne charge du condensateur,
- vérification de l'état de ce condensateur,
- limitation du courant de charge et non déclenchement de l'alimentation en cas de défaut de ce condensateur, de mauvais câblage ou d'erreur de sélection de tension,
- éventuel reformage (charge à courant réduit) de ce condensateur,
- génération d'une alarme en cas de défaut.

Il existe différentes techniques de charge et de surveillance d'un tel condensateur, et notamment :
- l'utilisation d'impulsions de décharge ou d'auto-décharge dans une impédance connue et la mesure de la tension résiduelle,
- l'utilisation d'une mesure du courant de fuite.

Mais de telles techniques ne permettent pas de respecter les fonctionnalités recherchées telles que définies ci-dessus. De plus elles ne sont pas satisfaisantes pour les raisons suivantes :
- S'il n'y a pas de mesure du courant de fuite, il y a un risque d'endommagement du condensateur : en effet si le courant de fuite est élevé et non limité dans le temps, il peut y avoir destruction du condensateur au bout de quelques minutes.
- S'il y a une mesure du courant de fuite, il y a un risque de détection intempestive de défaut et de non disponibilité de durée excessive.
- Ces techniques ne permettent pas un reformage du condensateur, qui peut être nécessaire.

Le condensateur peut présenter différents défauts, être mal câblé, ou chargé à une tension excessive, ce qui peut se traduire par :
- un condensateur en court-circuit ou avec perte de capacité,
- une rupture de connexion,
- un courant de fuite excessif avec risque d'emballement thermique et de destruction (lors du maintien d'une tension normale). Il faut remarquer qu'un condensateur stocké trop longtemps hors tension (1 à 5 ans suivant le type) nécessite un reformage pour recréer la couche d'oxyde d'aluminium dont l'épaisseur diminue avec le temps.

L'invention a pour objet de proposer un dispositif et un procédé de charge et de surveillance d'au moins un condensateur pour pallier de tels inconvénients en permettant de charger ce (ou ces) condensateur(s) dans un délai fixé, de détecter le plus vite possible une anomalie, et de corriger celle-ci lorsqu'il est possible de la corriger, et en permettant également un reformage de ce (ou ces) condensateur(s).

Le document US2008/0191821 décrit un dispositif selon le préambule de la revendication 1.

### EXPOSÉ DE L'INVENTION

L'invention concerne un système de commande de l'ouverture et de la fermeture d'un appareillage moyenne ou haute tension à l'aide d'un actionneur magnétique, comprenant un dispositif de charge et de surveillance d'au moins un condensateur utilisé en décharge pour commander cet actionneur magnétique, caractérisé en ce que le dispositif comprend :
- des premiers moyens de fourniture d'une consigne de tension,
- un premier régulateur de la tension aux bornes de cet au moins un condensateur, qui a une entrée de mesure recevant un signal de mesure, une entrée de consigne reliée à la sortie de ces premiers moyens de fourniture d'une consigne de tension et une sortie,
- de seconds moyens de fourniture d'une consigne de courant dont l'entrée est reliée à la sortie de ce premier régulateur,
- un second régulateur du courant de charge de cet au moins un condensateur, qui a une entrée de mesure recevant un signal de mesure, une entrée de consigne reliée à la sortie de ces seconds moyens de fourniture d'une consigne de courant et une sortie,
- une alimentation,
- un commutateur piloté par la sortie du second régulateur, et situé entre l'alimentation et une borne de cet au moins un condensateur,
- un éventuel convertisseur AC/DC ou DC/DC disposé entre l'alimentation et le commutateur,

L'entrée de mesure du premier régulateur peut être reliée à un pont résistif. L'entrée de mesure du second régulateur peut être reliée à au moins un shunt résistif.

L'invention concerne également un système de commande d'un appareillage moyenne ou haute tension comprenant un tel dispositif permettant la fermeture ou l'ouverture de cet appareillage.

Le commutateur peut comprendre au moins une ampoule à vide. Le système peut comporter une alimentation de puissance réduite afin de pouvoir limiter la puissance d'appel. Il peut comprendre une résistance de décharge commutable afin de décharger rapidement le condensateur. Il peut comprendre une protection en courant rapide permettant de prévenir un court-circuit.

L'invention concerne également un procédé de commande de l'ouverture et de la fermeture d'un appareillage moyenne ou haute tension à l'aide d'un actionneur magnétique, dans lequel on charge et on surveille au moins un condensateur utilisé en décharge pour commander cet actionneur magnétique, caractérisé en ce qu'il comprend les étapes suivantes :
- charge rapide de cet au moins un condensateur à fort courant pendant une durée déterminée, en utilisant un premier régulateur de la tension aux bornes de cet au moins un condensateur et un second régulateur du courant de charge de cet au moins un condensateur, cette étape de charge rapide consistant à :
   - modifier la consigne de tension du premier régulateur de 0 volt à une valeur de tension de charge du condensateur,
   - modifier la consigne de courant du second régulateur d'un courant de maintien à courant de sortie du premier régulateur,

   - limitation du courant de charge à une valeur de maintien, qui consiste à modifier la consigne de courant de sortie du premier régulateur à courant de maintien,
   - détection d'un éventuel défaut et reformage de cet au moins un condensateur, qui consiste à modifier la consigne de courant avec des impulsions de courant de maintien à zéro.

Avantageusement, on utilise un dispositif comprenant un régulateur de tension et un régulateur de courant, et l'étape de charge rapide consistant à :
- modifier la consigne de tension de 0 volt à la tension de charge du condensateur,
- modifier la consigne de courant d'un courant de maintien à courant de sortie du régulateur de tension.

L'étape de limitation du courant de charge à une valeur de maintien consiste à modifier la consigne de courant de sortie du régulateur de tension à courant de maintien.

L'étape de détection de défaut et de reformage est interruptible et consiste à modifier la consigne de courant avec des impulsions de courant de maintien à zéro. Avantageusement, on peut laisser le au moins un condensateur se décharger quelques secondes et vérifier que la tension à ses bornes ne passe pas plus d'un certain nombre de fois, par exemple 3 fois, au-dessous d'un seuil déterminé, sinon on déclenche une alarme.

Le courant de charge peut être piloté de manière numérique.

Le dispositif et le procédé de l'invention permettent :
- de charger un ou plusieurs condensateurs à une tension déterminée dans un délai fixé, par exemple 15 secondes,
- d'utiliser une telle tension déterminée de valeur appropriée pour ne pas détériorer le (ou les) condensateur(s),
- de détecter une baisse de tension, pour si possible, ramener le niveau de tension à une valeur suffisante et faire ainsi fonctionner correctement l'actionneur magnétique,
- de détecter une baisse de tension normale suivant une occurrence fixée pour éviter toute alarme intempestive et donc un déclenchement ou une mise en sécurité non justifiée,
- de détecter une baisse de tension anormale pour envoyer une alarme spécifiant une détérioration anormale de la capacité,
- d'éviter une destruction en cas de défaut du condensateur, en cas d'inversion de polarité, et en cas d'erreur de la tension de charge.

### BRÈVE DESCRIPTION DES DESSINS

Les figures 1 et 2A à 2D illustrent le dispositif de l'invention et son fonctionnement.
La figure 3 illustre les différentes étapes du procédé de l'invention.

### EXPOSÉ DÉTAILLÉ DE MODES DE RÉALISATION PARTICULIERS

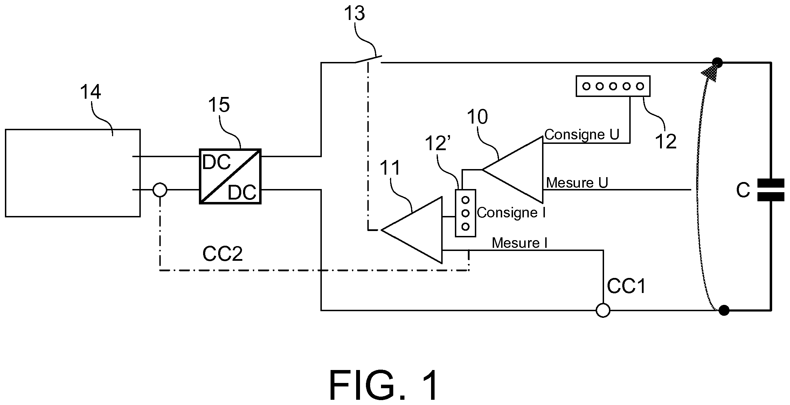

Comme illustré sur la figure 1, le dispositif de charge et de surveillance d'un condensateur C utilisé en décharge pour commander un actionneur magnétique, selon l'invention, comprend :
- un premier régulateur 10 de la tension aux bornes de ce condensateur C, qui a une entrée de mesure (mesure U), une entrée consigne (consigne U) reliée à la sortie de premiers moyens 12 de fourniture d'une consigne de tension et une sortie reliée à l'entrée de seconds moyens 12' de fourniture d'une consigne de courant,
- un second régulateur 11 du courant de charge du condensateur, qui a une entrée de mesure (mesure I), une entrée consigne (consigne I) reliée à la sortie de ces seconds moyens 12' de fourniture d'une consigne de courant, et une sortie,
- une alimentation 14,
- un commutateur 13, par exemple en semiconducteur, piloté par la sortie de ce second régulateur 11, pour commuter le courant de cette alimentation 14 vers une borne du condensateur C,
- un éventuel convertisseur 15, par exemple DC/DC.

Le premier régulateur 10 reçoit un signal de mesure (mesure U) issu par exemple d'un pont résistif et un signal de consigne (consigne U) variant en fonction d'une logique de commande, qui peut être une tension finale de charge ou 0 volt.

Le second régulateur 11 reçoit un signal de mesure (mesure I) issu d'un capteur de mesure, par exemple d'un (ou de deux) shunt (s) résistif (s) et un signal de consigne (consigne I) qui varie en fonction du temps suivant une logique de commande préalablement établie. L'utilisation d'un second shunt de mesure commutable permet d'améliorer la sensibilité.

Au lieu de mesurer le courant en CC1, on peut avantageusement mesurer le courant au primaire du convertisseur 15 (liaison CC2), afin de travailler à puissance constante.

La sortie du premier régulateur 10, qui est reliée aux seconds moyens de fourniture d'une consigne de courant 12', est un des paramètres qui influence l'entrée consigne du second régulateur 11.

Le dispositif de l'invention permet de réaliser les fonctionnalités suivantes :
- charge du condensateur C à partir de l'alimentation 14 en un temps minimum, par exemple 15 secondes,
- vérification de la bonne charge du condensateur C (tension comprise dans des tolérances voulues),
- vérification de l'état du condensateur C en détectant d'éventuels défauts tels que :
   - une connexion ouverte,
   - un court-circuit,
   - une diminution importante de la capacité,
   - un courant de fuite anormal,
- limitation du courant de charge du condensateur C en cas de défaut de celui-ci, de mauvais câblage ou d'erreur de sélection de tension, afin de ne pas endommager le condensateur C ou le dispositif de l'invention, et non déclenchement de l'alimentation 14,
- reformage éventuel du condensateur C (charge à courant réduit).
- génération d'une alarme en cas de défaut.

Plus précisément, les deux régulateurs 10 et 11 fonctionnent de la façon suivante :

### Phase I : charge rapide

Le signal de consigne de tension 10 passe de 0V à la valeur finale souhaitée de la tension de charge. La sortie du premier régulateur 10 passe alors d'un courant de maintien à un courant maximum de charge qui est fixé par la puissance de charge P1 du dispositif de l'invention. Cette valeur de courant est maintenue pendant une durée t1, par exemple égale à 20 secondes, durant laquelle le condensateur C se charge et atteint sa valeur finale, normalement un temps inférieur à durée t2 par exemple 15 secondes.

### Phase II : limitation du courant à une valeur de maintien

A la fin de la durée t1, le signal de consigne de courant est diminué à une valeur de courant réduit qui correspond à la puissance P2 que peut dissiper le condensateur C.

### Phase III : détection d'un défaut et reformage

Après la durée t2 on passe dans un cycle où on laisse le condensateur C se décharger quelques secondes et on vérifie que la tension à ses bornes ne descend pas en dessous d'un seuil de défaut. Si ce seuil est franchi successivement plusieurs fois, par exemple 3 fois, il y a émission d'une alarme. Sinon le défaut n'est pas pris en compte, le compteur de nombre de défauts est remis à zéro et il n'y a pas émission d'alarme.

La phase II est une phase originale. D'habitude on n'utilise pas une valeur de courant réduit. Dans l'invention, lorsqu'un condensateur C sain est chargé, il subsiste un faible courant de fuite inférieur à la valeur de courant réduit que l'on a fixé. Cette valeur de courant réduit n'endommage pas le condensateur C car il correspond à une dissipation thermique acceptable. Il est choisi d'après les paramètres du fabricant.

La phase III permet de détecter une diminution de la capacité du condensateur ou des résistances du courant de fuite par modification de la constante de décharge RC du condensateur C. Le vieillissement de telles caractéristiques est un phénomène lent (plusieurs semaines) et la détection possède une constante de temps faible (quelques secondes).

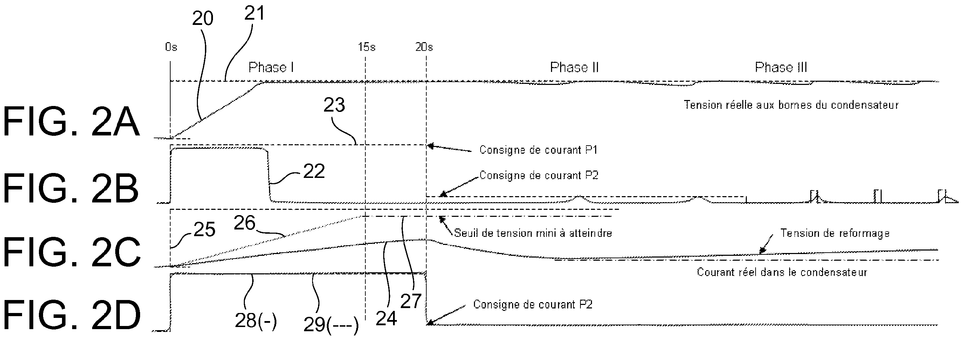

Les courbes illustrées sur les figures 2A à 2D permettent de mettre en évidence ce fonctionnement :
- La courbe 20 sur la figure 2A illustre l'évolution de la tension aux bornes d'un condensateur C sain (en bon état), la courbe en tirets 21 correspondante étant la consigne de tension du premier régulateur 10.
- La courbe 22 sur la figure 2B illustre l'évolution du courant dans un condensateur C sain avec des impulsions de courant de maintien à zéro pendant la phase III, la courbe en tirets 23 correspondante étant la consigne de courant du second régulateur 11.
- La courbe 24 sur la figure 2C illustre l'évolution de la tension aux bornes d'un condensateur C défectueux, la courbe en tirets 25 correspondante étant la consigne de tension du premier régulateur 10.
- La courbe en pointillé 26 sur la figure 2C illustre l'évolution de la tension aux bornes d'un condensateur C qui aurait les caractéristiques limites pour lesquelles le dispositif de l'invention est dimensionné.
- Le trait mixte 27 sur la figure 2C correspond au seuil de tension minimum à atteindre au bout de 15 secondes (dimensionnement) ou 20 secondes (seuil d'alarme) durant la phase III, la tension remontant lentement durant le reformage jusqu'à atteindre la valeur de consigne (courbe en tirets).
- La courbe 28 sur la figure 2D illustre l'évolution du courant dans un condensateur C défectueux, la courbe en tirets 29 correspondante étant la consigne de courant du second régulateur 11.

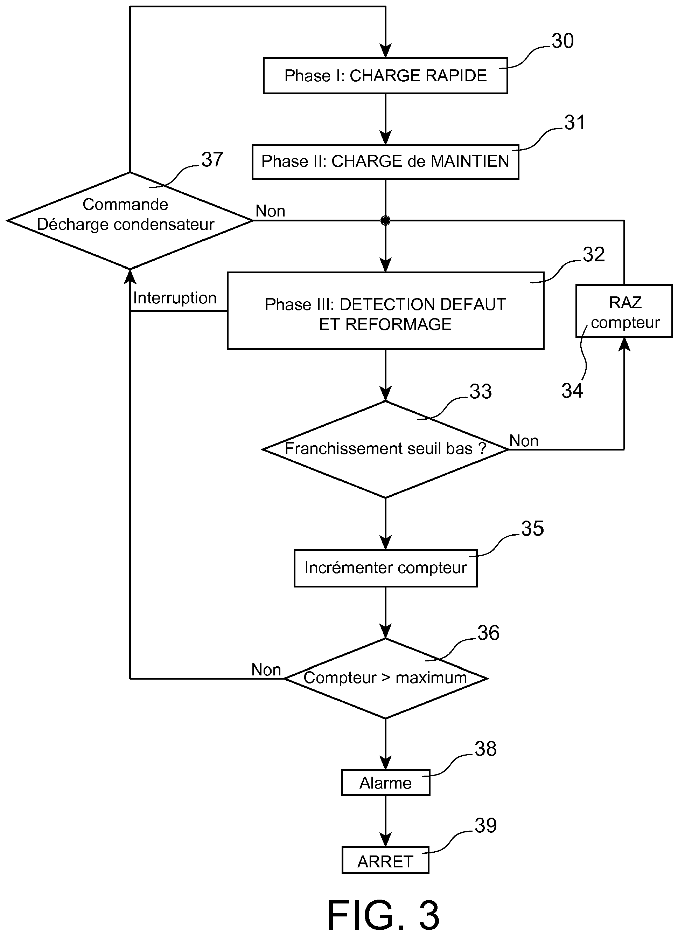

L'organigramme, illustré sur la figure 3, reprend les différentes étapes du procédé de l'invention :
- la phase I : charge rapide (étape 30), qui consiste à :
   - modifier la consigne de tension de 0 volt à une valeur de tension de charge du condensateur,
   - modifier la consigne de courant d'un courant de maintien à un courant de sortie du premier régulateur 10.
- la phase II : limitation du courant de charge à une valeur de maintien (étape 31), qui consiste à :
   - modifier la consigne de courant de sortie du premier régulateur 10 à courant de maintien,
- la phase III : détection de défaut et reformage (étape 32), interruptible, qui consiste à :
   - modifier la consigne de courant avec des impulsions de courant de maintien à zéro,
- un test de franchissement d'un seuil bas de défaut (étape 33) avec une étape de remise à zéro d'un compteur (étape 34) en cas de réponse négative,
- une étape d'incrémentation de ce compteur (étape 35),
- une étape (étape 36) de comparaison de ce compteur à un seuil haut (par exemple 3) avec test de commande de décharge du condensateur C (étape 37) si réponse négative,
- une étape d'alarme (étape 38),
- une étape d'arrêt (étape 39) avec modification de la consigne de courant d'une valeur de courant instantané à zéro.

Sur interruption de la phase III, on peut passer à l'étape de test de commande décharge condensateur (étape 37). De cette étape de test en cas de réponse négative, on passe à la phase III ou sinon, en cas de réponse positive, on passe à la phase I.

### Exemple de valeurs utilisées

Dans un exemple de réalisation avantageux on considère les valeurs suivantes :
- puissance P1 de 50 à 200 W,
- puissance P2 égale à 15 W environ,
- condensateur C de 10.000 µF sous 250 V et 25°C d'échauffement,
- courant de charge pendant la phase I (P1) d'environ 0,3 à 5 A (décroît avec la tension du condensateur C),
- courant de charge pendant la phase II (P2) de 50 mA environ.

### REFERENCES

[1] US 2008/0191821

## Revendications

1. Système de commande de l'ouverture et de la fermeture d'un appareillage moyenne ou haute tension à l'aide d'un actionneur magnétique, comprenant un dispositif de charge et de surveillance d'au moins un condensateur (C) utilisé en décharge pour commander cet actionneur magnétique, **caractérisé en ce que** le dispositif comprend :
- des premiers moyens (12) de fourniture d'une consigne de tension,
- un premier régulateur (10) de la tension aux bornes de cet au moins un condensateur (C), qui a une entrée de mesure recevant un signal de mesure, une entrée de consigne reliée à la sortie de ces premiers moyens (12) de fourniture d'une consigne de tension et une sortie,
- de seconds moyens de fourniture d'une consigne de courant dont l'entrée est reliée à la sortie de ce premier régulateur (10),
- un second régulateur (11) du courant de charge de cet au moins un condensateur, qui a une entrée de mesure recevant un signal de mesure, une entrée de consigne reliée à la sortie de ces seconds moyens (12') de fourniture d'une consigne de courant et une sortie,
- une alimentation (14),
- un commutateur (13) piloté par la sortie du second régulateur (11), et situé entre l'alimentation (14) et une borne de cet au moins un condensateur (C).

2. Système selon la revendication 1 qui comprend un convertisseur AC/DC ou DC/DC (15) disposé entre l'alimentation (14) et le commutateur (13).

3. Système selon la revendication 1, dans lequel l'entrée de mesure du premier régulateur (10) est reliée à un pont résistif.

4. Système selon la revendication 1, dans lequel l'entrée de mesure du second régulateur (11) est reliée à au moins un shunt résistif.

5. Système selon la revendication 1, dans lequel le commutateur comprend au moins une ampoule à vide.

6. Système selon la revendication 1, dans laquelle l'alimentation est une alimentation de puissance réduite afin de pouvoir limiter la puissance d'appel.

7. Système selon la revendication 1, qui comprend une résistance de décharge commutable afin de décharger rapidement le au moins un condensateur (C).

8. Système selon la revendication 1, qui comprend une protection en courant rapide permettant de prévenir un court-circuit.

9. Procédé de commande, utilisant un système de commande selon la revendication 1, de l'ouverture et de la fermeture d'un appareillage moyenne ou haute tension à l'aide d'un actionneur magnétique, dans lequel on charge et on surveille au moins un condensateur utilisé en décharge pour commander cet actionneur magnétique, comprenant les étapes suivantes :
- charge rapide de cet au moins un condensateur à fort courant pendant une durée déterminée, en utilisant un premier régulateur de la tension aux bornes de cet au moins un condensateur et un second régulateur du courant de charge de cet au moins un condensateur, cette étape de charge rapide consistant à :
• modifier la consigne de tension du premier régulateur de 0 volt à une valeur de tension de charge du condensateur,
• modifier la consigne de courant du second régulateur d'un courant de maintien à courant de sortie du premier régulateur (10),
- limitation du courant de charge à une valeur de maintien, qui consiste à modifier la consigne de courant de sortie du premier régulateur (10) à courant de maintien,
- détection d'un éventuel défaut et reformage de cet au moins un condensateur, qui consiste à modifier la consigne de courant avec des impulsions de courant de maintien à zéro.

10. Procédé selon la revendication 9, dans lequel l'étape de détection de défaut et de reformage est interruptible.

11. Procédé selon la revendication 10, dans lequel on laisse le au moins un condensateur se décharger quelques secondes et on vérifie que la tension à ses bornes ne passe pas plus d'un certain nombre de fois au-dessous d'un seuil déterminé, sinon on déclenche une alarme.

12. Procédé selon la revendication 9, dans lequel on pilote le courant de charge de manière numérique.

## Patentansprüche

1. Steuersystem zum Steuern des Öffnens und Schließens einer Mittel- bzw. Hochspannungseinrichtung mit Hilfe eines magnetischen Aktuators, enthaltend eine Vorrichtung zum Laden und Überwachen zumindest eines Kondensators (C), der unter Entladung dazu verwendet wird, diesen magnetischen Aktuator zu steuern, **dadurch gekennzeichnet, dass** die Vorrichtung enthält:
- erste Mittel (12) zum Bereitstellen eines Spannungssollwerts,
- einen ersten Regler (10) für die Spannung an den Anschlussklemmen dieses zumindest einen Kondensators (C), der einen Messwerteingang, der ein Messsignal empfängt, einen Sollwerteingang, der mit dem Ausgang dieser ersten Mittel (12) zum Bereitstellen eines Spannungssollwerts verbunden ist, und einen Ausgang hat,
- zweite Mittel zum Bereitstellen eines Stromsollwerts, deren Eingang mit dem Ausgang dieses ersten Reglers (10) verbunden ist,
- einen zweiten Regler (11) für den Ladestrom dieses zumindest einen Kondensators (C), der einen Messwerteingang, der ein Messsignal empfängt, einen Sollwerteingang, der mit dem Ausgang dieser zweiten Mittel (12') zum Bereitstellen eines Stromsollwerts verbunden ist, und einen Ausgang hat,
- eine Speisequelle (14),
- einen Schalter (13), der über den Ausgang des zweiten Reglers (11) angesteuert wird und zwischen der Speisequelle (14) und einer Anschlussklemme dieses zumindest einen Kondensators (C) liegt.

2. System nach Anspruch 1, enthaltend einen AC/DC- oder DC/DC-Wandler (15), der zwischen der Speisequelle (14) und dem Schalter (13) angeordnet ist.

3. System nach Anspruch 1, wobei der Messwerteingang des ersten Reglers (10) mit einer Widerstandsbrücke verbunden ist.

4. System nach Anspruch 1, wobei der Messwerteingang des zweiten Reglers (11) mit zumindest einem Shunt-Widerstand verbunden ist.

5. System nach Anspruch 1, wobei der Schalter zumindest eine Vakuumröhre enthält.

6. System nach Anspruch 1, wobei die Speisequelle eine Quelle verminderter Leistung ist, um die Einschaltleistung begrenzen zu können.

7. System nach Anspruch 1, enthaltend einen schaltbaren Entladewiderstand, um den zumindest einen Kondensator (C) schnell zu entladen.

8. System nach Anspruch 1, enthaltend einen Schnellstromschutz, mit dem einem Kurzschluss vorgebeugt werden kann.

9. Verfahren zum Steuern des Öffnens und Schließens einer Mittel- bzw. Hochspannungseinrichtung mit Hilfe von einem magnetischen Aktuator unter Verwendung eines Steuersystems nach Anspruch 1, wobei zumindest ein Kondensator geladen und überwacht wird, der unter Entladung verwendet wird, um diesen magnetischen Aktuator zu steuern, umfassend die nachfolgenden Schritte:
- Schnellladen dieses zumindest einen Kondensators mit hohem Strom während einer bestimmten Zeitdauer unter Verwendung eines ersten Reglers für die Spannung an den Anschlussklemmen dieses zumindest einen Kondensators und eines zweiten Reglers für den Ladestrom dieses zumindest einen Kondensators, wobei dieser Schnellladeschritt darin besteht, dass:
• der Spannungssollwert des ersten Reglers von 0 Volt auf einen Ladespannungswert des Kondensators geändert wird,
• der Stromsollwert des zweiten Reglers von einem Haltestrom auf den Ausgangsstrom des ersten Reglers (10) geändert wird,
- Begrenzen des Ladestroms auf einen Haltewert, was darin besteht, den Ausgangsstromsollwert des ersten Reglers (10) auf Haltestrom zu ändern,
- Erfassen eines eventuellen Fehlers und Reformieren dieses zumindest einen Kondensators, was darin besteht, den Stromsollwert mit Haltestromimpulsen auf null zu ändern.

10. Verfahren nach Anspruch 9, wobei der Schritt der Fehlererfassung und der Reformierung unterbrechbar ist.

11. Verfahren nach Anspruch 10, wobei man den zumindest einen Kondensator sich einige Sekunden lang entladen lässt und wobei überwacht wird, dass die Spannung an seinen Anschlussklemmen nicht öfters als eine bestimmte Anzahl von Malen unter einen bestimmten Schwellwert fällt, andernfalls ein Alarm ausgelöst wird.

12. Verfahren nach Anspruch 9, wobei der Ladestrom digital gesteuert wird.

## Claims

1. Control system for controlling opening and closing of medium or high voltage switchgear using a magnetic actuator, comprising a device for charging and monitoring at least one capacitor (C) used in discharge to control this magnetic actuator, **characterised in that** the device comprises:
- first supply means (12) for supplying a set voltage;
- a first regulator (10) for regulating the voltage at the terminals of this at least one capacitor (C), that has a measurement input onto which a measurement signal is applied, a set value input connected to the output of these first supply means (12) for supplying a set voltage and an output;
- second supply means for supplying a set current that has an input connected to the output of this first regulator (10),
- a second regulator (11) for regulating the charging current of this at least one capacitor, that has a measurement input onto which a measurement signal is applied, a set value input connected to the output from these second supply means (12') for supplying a set current and an output,
- a power supply (14),
- a switch (13) controlled by the output of the second regulator (11), and located between the power supply (14) and a terminal of this at least one capacitor (C).

2. System according to claim 1 that comprises an AC/DC or DC/DC converter (15) located between the power supply (14) and the switch (13).

3. System according to claim 1, wherein the measurement input of the first regulator (10) is connected to a resistive bridge.

4. System according to claim 1, wherein the measurement input of the second regulator (11) is connected to at least one resistive shunt.

5. System according to claim 1, wherein the switch comprises at least one vacuum bottle.

6. System according to claim 1, wherein the power supply is a low-power power supply so as to limit the inrush power.

7. System according to claim 1, that comprises a switchable discharge resistor to quickly discharge the at least one capacitor (C).

8. System according to claim 1, that comprises a fast current protection to prevent a short circuit.

9. Control method using a control system according to claim 1, to control opening and closing of medium or high voltage switchgear using a magnetic actuator, in which at least one capacitor used in discharge to control this magnetic actuator is charged and monitored, comprising the following steps:
- fast charge of this at least one high current capacitor during a determined period, using a first regulator of the voltage at the terminals of this at least one capacitor and a second regulator of the charging current of this at least one capacitor, said charging step consisting of
• modifying the set voltage of the first regulator from 0 volts to a value of the capacitor charging voltage,
• modifying the set current of the second regulator from a holding current to an output current of the first regulator,
- limitation of the charging current to a holding value, that consists of modifying the set output current from the first regulator (10) to a holding current,
- detection of a fault and reforming of this at least one capacitor, that consists of modifying the set current with hold-at-zero current pulses.

10. Method according to claim 9, wherein the fault detection and reforming step can be interrupted.

11. Method according to claim 10, wherein the at least one capacitor is allowed to discharge for a few seconds and it is then checked that the voltage at its terminals does not drop below a determined threshold more than a given number of times, otherwise an alarm is triggered.

12. Method according to claim 9, in which the charging current is controlled digitally.
